# EUROPÄISCHE PATENTANMELDUNG

(11) **EP 1 700 645 A1**
(43) Veröffentlichungstag der Anmeldung: **13.09.2006**
(21) Anmeldenummer: 06004587.9
(22) Anmeldetag: 07.03.2006
(51) Int. Cl.: B21C 37/08, B21C 37/22, B62D 21/00

(54) **Rohre mit integriertem Flansch, insbesondere aus flexibel gewalztem Material, für Fahrwerk- und Karosseriestrukturteile**

(30) Priorität: 11.03.2005 DE 102005011764
(71) Anmelder: Muhr und Bender KG, 57439 Attendorn (DE)
(72) Erfinder: Hauger, Andreas, Dr.-Ing., 57439 Attendorn (DE); Scheffe, Ute, Dipl.-Ing., 57223 Kreuztal (DE)
(74) Vertreter: Neumann, Ernst Dieter

(57) **Zusammenfassung**

Flanschrohr 11 aus Blech mit geschlossenem Querschnitt, das zumindest einen einstückig aus dem Blech des Rohrkörpers 12 gebildeten in Längsrichtung verlaufenden Flansch 13 aufweist.

## Beschreibung

Der Gegenstand der Erfindung betrifft Rohre und Profile für den Einsatz im Automobil-Karosseriebau. Es ist bekannt, derartige Rohre und Profile durch Rundbiege- oder Tiefziehprozesse aus Blech herzustellen. Hierbei ist auch bereits die Verwendung von sogenanntem flexibel gewalztem Material bekannt, bei dem die Wandstärke des Blechmaterials in Walzrichtung veränderlich ist. Aus derartig gewalztem Material können Rohre oder Profile mit über der Länge veränderlicher Blechstärke hergestellt werden.

Beim Einbau derartiger Rohre oder Profile in eine Karosseriestruktur kann die Anbindung an ebene Bleche problematisch sein. Eine derartige Anbindung ist beispielsweise erforderlich, wenn die Rohre oder Profile Flächenteile wie Dächer, Türen oder Hauben aussteifen sollen.

Hiervon ausgehend liegt der vorliegenden Erfindung die Aufgabe zugrunde, neuartige Rohre oder Profile bereitzustellen, die verbesserte Anbindungsmöglichkeiten im Karosseriebereich aufweisen. Die Lösung hierfür besteht aus einem Flanschrohr aus Blech mit geschlossenem Querschnitt, der zumindest einen einstückig aus dem Blech des Rohrkörpers gebildeten in Längsrichtung verlaufenden Flansch aufweist. Die erforderliche Anbindung muß hierbei nicht am gewölbten Querschnitt des Rohrkörpers erfolgen, sondern kann an dem zumindest einen ebenen Flansch ansetzen. Der zumindest eine Flansch kann sich über die gesamte Länge erstrecken oder in Längsrichtung auf die erforderlichen Anbindungsbereiche beschränkt sein. Letzteres kann durch späteres Entfernen nicht benötigter Flanschabschnitte erfolgen. Bevorzugt wird jedoch beim Herstellen des Flanschrohres bereits ein solcher Zuschnitt erfolgen, der einzelne Längsflansche und flanschlose Rohrabschnitte in gewünschter Verteilung entstehen läßt.

Ebenfalls je nach gewünschter Anbindung kann der zumindest eine Flansch unterschiedliche Ausrichtung im Verhältnis zum geschlossenen Rohrkörper aufweisen, die von tangential bis radial reichen kann.

Zum Schließen des Rohrkörpers zum geschlossenen Querschnitt sind unterschiedliche Konfigurationen möglich. Nach einer ersten Alternative kann vorgesehen sein, daß das Blech des Rohrkörpers mit einer freien Kante im stumpfen Stoß am Fußbereich des zumindest einen Flansches ansetzt. Alternativ ist es möglich, daß das Blech des Rohrkörpers mit einer freien Kante über den Fußbereich des zumindest einen Flansches innen überlappend hinausreicht. Schließlich ist möglich, daß das Blech des Rohrkörpers mit der vom Rohrkörper weggebogenen freien Kante seitlich am Flansch parallel anliegt. Es können auch zwei gleichbreite Flanschbleche entlang beider Kanten vom Rohrkörper weggebogen werden, aus denen ein doppellagiger Flansch gebildet wird. In allen Fällen kann der Rohrkörper nahe dem Fußbereich des zumindest einen Flansches längs verschweißt sein.

In besonderer Anpassung an die Festigkeitserfordernisse kann das Blech des Rohrkörpers im Querschnitt variable Dicke haben. Hierbei ist es sowohl möglich, daß der Flansch aus Material größerer Dicke besteht, wenn die Krafteinleitung besonderen Belastungen ausgesetzt ist. Andererseits ist es auch möglich, daß der Rohrkörper aus Blech größerer Dicke ist, wenn z.B. besonders hohe Biegekräfte auf den Rohrkörper ausgeübt werden. Dickere Rohrbereiche oder Rohrabschnitte können auch als Materialreserve für nachfolgende Umformschritte am Rohr wie Biegen oder Aufweiten dienen.

In anderen Fällen kann es sinnvoll sein, daß das Blech des Rohrkörpers über der Länge variable Dicke hat, wobei die Endabschnitte gegenüber einem mittleren Bereich sowohl dicker als auch dünner sein können, je nachdem, wo die höchsten Belastungen sind oder im Falle des Fahrzeugcrashs die leichteste Verformbarkeit vorliegen soll. Die Dicke des Flansches über der Länge wird dabei der Wandstärke des Rohrkörpers über der Länge entsprechen.

Die Variation der Wandstärke kann deutlich ausgebildet sein, so daß die dünneren Bereiche zwischen 15 und 50 % der Dicke der stärkeren Bereiche aufweisen.

Übliche Größenordnungen des ausgeführten Erzeugnisses liegen zwischen 30 und 150 mm Durchmesser für den Rohrkörper und zwischen 20 und 50 mm für die Breite des zumindest einen Flansches.

Der Erfindung liegt weiterhin die Aufgabe zugrunde, ein geeignetes Verfahren und ein Werkzeug zur Herstellung eines Flanschrohres mit einem Rohrkörper mit geschlossenem Querschnitt, das zumindest ein einstückig aus dem Blech des Rohrkörpers gebildeten in Längsrichtung verlaufenden Flansch aufweist, bereitzustellen. Die Lösung hierfür besteht in einem Verfahren zur Herstellung eines Flanschrohres mit einem Rohrkörper mit geschlossenem Querschnitt, das zumindest einen einstückig aus dem Blech des Rohrkörpers gebildeten in Längsrichtung verlaufenden Flansch aufweist,
bei welchem in einem unteren ersten Biegegesenk mittels eines Stempels ein im Querschnitt U-förmiges Profil mit parallelen Schenkeln hergestellt wird, und
in einem unteren zweiten Biegegesenk mittels eines oberen Biegegesenks aus den beiden Schenkeln ein Rohrkörper mit geschlossenem Querschnitt hergestellt wird, wobei aus zumindest einem der Schenkel der zumindest eine in Längsrichtung verlaufende Flansch gebildet wird.

Hierbei ist insbesondere vorgesehen, daß das im Querschnitt U-förmige Profil mit Schenkeln unterschiedlicher Länge hergestellt wird, wobei aus dem längeren Schenkel letztendlich der Flansch entsteht. Alternativ kann vorgesehen sein, daß das im Querschnitt U-förmige Profil mit Schenkeln gleicher Länge hergestellt wird, aus denen parallel liegende Flanschbleche eines doppellagigen Flansches entstehen. Abschließend wird der Rohrkörper im Fußbereich des zumindest einen Flansches verschweißt. Ein besonders kostengünstiges Verfahren besteht darin, daß das Verschweißen des Rohrkörpers gleichzeitig mit dem Verbinden des zumindest einen Flansches mit einem dritten Teil erfolgt, also erst bei der Integration in eine Fahrzeugkarosseriestruktur.

Werkzeuge zum Rundbiegen von Blechen zur U-Form sind grundsätzlich bekannt und werden in einem ersten Verfahrensschritt auch für das obenbezeichnete Verfahren eingesetzt. Sie bestehen aus einem Gesenkunterteil mit halbzylindrischem Querschnitt und zwei sich anschließenden parallelen Flanken sowie einem entsprechenden im wesentlichen zylindrischen Stempel. Zur Fertigstellung des erfindungsgemäßen Erzeugnisses wird weiterhin ein Werkzeug zur Herstellung eines Flanschrohres aus Blech mit einem Rohrkörper mit geschlossenem Querschnitt, das zumindest einen einstückig aus dem Blech des Rohrkörpers gebildeten in Längsrichtung verlaufenden Flansch aufweist, vorgeschlagen, umfassend
ein Gesenkunterteil mit im wesentlichen halbzylindrischer Aufnahmemulde und ein Gesenkoberteil mit im wesentlicher halbzylindrischer Formmulde, die die Aufnahmemulde zum zylindrischen Querschnitt ergänzt, wobei in der Formmulde ein längsverlaufendes Schwert und parallel dazu zumindest ein ebener Längsschlitz zur Aufnahme des zumindest einen Flansches ausgebildet sind. Ein zweiter Längsschlitz geringerer Tiefe oder gleicher Tiefe kann auf der anderen Seite des längsverlaufenden Schwerts ausgebildet sein.

Beim Einsatz dieses Werkzeugs wird ein kürzerer freier Schenkel des U-förmigen Profils beim Rundbiegen an dem Längsschwert stumpf anschlagen, während sich ein längerer freier Schenkel auf der anderen Seite am Längsschwert nach außen umbiegt und in den Längsschlitz eindringt, so daß der Flansch entsteht. Sofern eine freie Kante außen am Flansch anliegend mit diesem verschweißt werden soll, wie weiter vor erwähnt, kann ein zweiter Längsschlitz geringerer Tiefe auf der ersten Seite des Längsschwertes ausgebildet sein, in das sich dann ein kürzerer Teil des kürzeren Schenkels einbiegt. Zur Ausbildung von zwei Flanschblechen eines doppellagigen Flansches können zwei gleichtiefe Längsschlitze zu beiden Seiten des Längsschwerts ausgebildet sein, in die sich zwei gleichlange Schenkel symmetrisch einbiegen.

Bevorzugte Ausführungsbeispiele der Erfindung, betreffend sowohl das Erzeugnis als auch das Verfahren zu seiner Herstellung und die dafür geeigneten Mittel sind in den Zeichnungen dargestellt und werden nachstehend beschrieben.

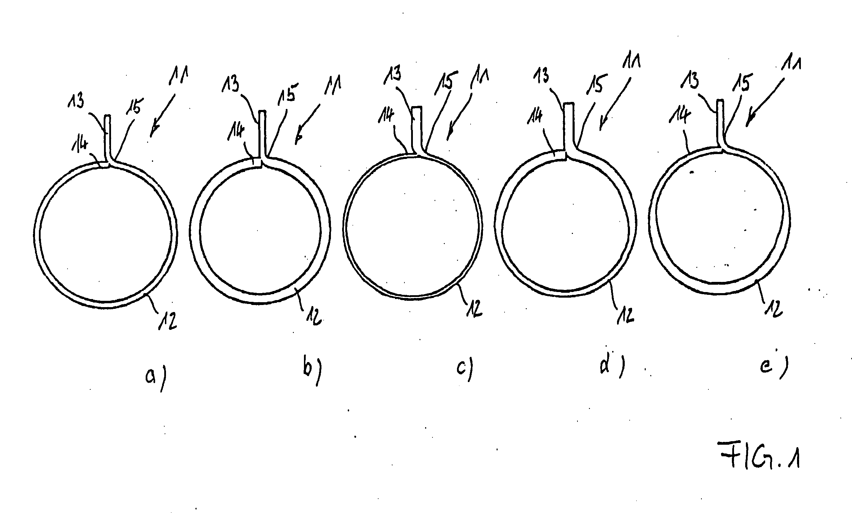

- Figur 1: zeigt verschiedene Ausführungen eines erfindungsgemäßen Rohres im Querschnitt
a) mit im Querschnitt konstanter Wandstärke
b) mit im Rohrbereich größerer Wandstärke als am Flansch
c) mit im Rohrbereich geringerer Wandstärke als am Flansch
d) mit im Rohrbereich variabler Wandstärke mit am Flansch maximaler Wandstärke
e) mit im Rohrbereich variabler Wandstärke mit am Flansch minimaler Wandstärke.
- Figur 2: zeigt verschiedene Ausführungsbeispiele der Ausbildung des Stoßes und der Ausführung der Schweißnaht an einem erfindungsgemäßen Rohr
a) mit stumpfem Stoß in einer ersten Ausführung
b) mit innerer Überlappung im Rohrkörper
c) mit äußerer Überlappung am Flansch
d) mit äußerer Überlappung mit einem dritten Teil
e) mit stumpfem Stoß in einer zweiten Ausführung.
- Figur 3: zeigt ein erfindungsgemäßes Rohr mit über der Länge variabler Wandstärke in 3D-Darstellung in einem Längsschnitt
a) mit an den axialen Enden reduzierter Wandstärke
b) mit an den axialen Enden erhöhter Wandstärke.
- Figur 4: zeigt ein erfindungsgemäßes Verfahren und eine erfindungsgemäße Vorrichtung in einer ersten Ausführung
a) erstes Untergesenk und Stempel in einer ersten Phase
b) erstes Untergesenk und Stempel in einer zweiten Phase
c) zweites Untergesenk und Obergesenk in einer dritten Phase
d1) Verschweißen des Erzeugnisses in einer ersten Variante
d2) Verschweißen des Erzeugnisses in einer zweiten Variante.

- Figur 5: zeigt ein erfindungsgemäßes Verfahren und eine erfindungsgemäße Vorrichtung in einer ersten Ausführung
a) erstes Untergesenk und Stempel in einer ersten Phase
b) erstes Untergesenk und Stempel in einer zweiten Phase
c) zweites Untergesenk und Obergesenk in einer dritten Phase
d) Verschweißen des Erzeugnisses.

In Figur 1 ist ein erfindungsgemäßes Flanschrohr 11 im Querschnitt in verschiedenen Ausführungen gezeigt, wobei übereinstimmend ein geschlossener Rohrkörper 12 und ein einstückig aus diesem herausgebildeter Längsflansch 13 erkennbar sind. Die freie Kante 14 des Bleches des Rohrkörpers 12 stößt in stumpfem Stoß am Wurzelbereich oder Fußbereich 15 des Flansches 13 an. Der Querschnitt des Rohrbereichs 12 ist kreisrund; der Flansch 13 steht radial ausgerichtet zum Rohrbereich 12 von diesem ab.

In Darstellung a) ist der Rohrkörper 12 und der Längsflansch 13 aus Blech konstanter Dicke gebildet.

In Darstellung b) ist der Rohrkörper 12 von der freien Kante 14 bis zum Fußbereich 15 des Flansches 13 aus Blech größerer Dicke, während der Flansch 13 aus Blech geringerer Dicke ist.

In Darstellung c) ist der Rohrkörper 12 von der freien Kante 14 bis zum Fußbereich 15 des Flansches 13 aus Blech geringerer Dicke, während der Flansch 13 aus Blech größerer Dicke ist.

In Darstellung d) ist der Rohrkörper 12 zunächst von der freien Kante 14 von größerer Dicke über einen Bereich von ca. 90°, hat dann einen Bereich von etwa 180° geringerer Dicke und geht dann wieder auf die größere Dicke über, die über den Fußbereich 15 des Flansches 13 hinaus den Flansch 13 selber erfaßt.

In Darstellung e) ist der Rohrkörper 12 zunächst von der freien Kante 14 von geringerer Dicke über einen Bereich von ca. 90°, hat dann einen Bereich von etwa 180° größerer Dicke und geht dann wieder auf die geringere Dicke über, die über den Fußbereich 15 des Flansches 13 hinaus den Flansch 13 selber erfaßt.

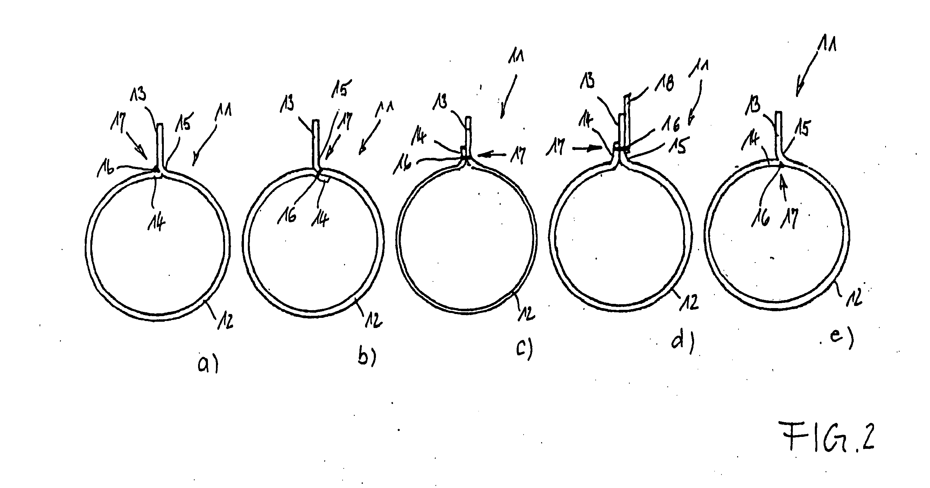

In Figur 2 sind verschiedene Ausführungen eines Flanschrohres im Querschnitt dargestellt, die jeweils für sich aus Blech konstanter Dicke gebildet sind. Gleiche Einzelheiten sind mit gleichen Bezugsziffern wie in Figur 1 bezeichnet. Mit einem Pfeil 17 ist jeweils die Richtung des Energieeintrags und gegebenenfalls des Schweißmaterialeintrags beim Schließen des Rohrkörpers 12 gezeigt.

Hierbei ist in Darstellung a) bei stumpfem Stoß der freien Kante 14 an den Fußbereich 15 eine Kehlnaht 16 von außen hergestellt.

In Darstellung b) ist bei einer inneren Überlappung der freien Kante 14 über den Fußbereich 15 hinaus ein Durchschweißen 16 dargestellt.

In Darstellung c) ist bei Anliegen der nach außen abgebogenen freien Kante 14 an den Flansch 13 ein Durchschweißen 16 der aufeinanderliegenden Bereiche der freien Kante 14 und des Flansches 13 vorgenommen.

In Darstellung d) ist bei nach außen abgebogener freien Kante 14 und äußerem Überlappen dieser freien Kante mit dem Flansch 13 außerhalb des Fußbereiches 15 eine Durchschweißung 16 mit einem zusätzlichen dritten Teil 18 gezeigt, wobei auf diese Weise der Rohrkörper 12 erst bei dem Verbinden mit einem dritten Teil 18 geschlossen wird.

In Darstellung e) ist bei stumpf am Fußbereich 13 innen anstoßender freier Kante 14 eine Schweißnaht 16 mit zusätzlichem Schweißgut von innen ausgeführt. Diese Möglichkeit ist nur bei verhältnismäßig kurzen Flanschrohren problemlos möglich.

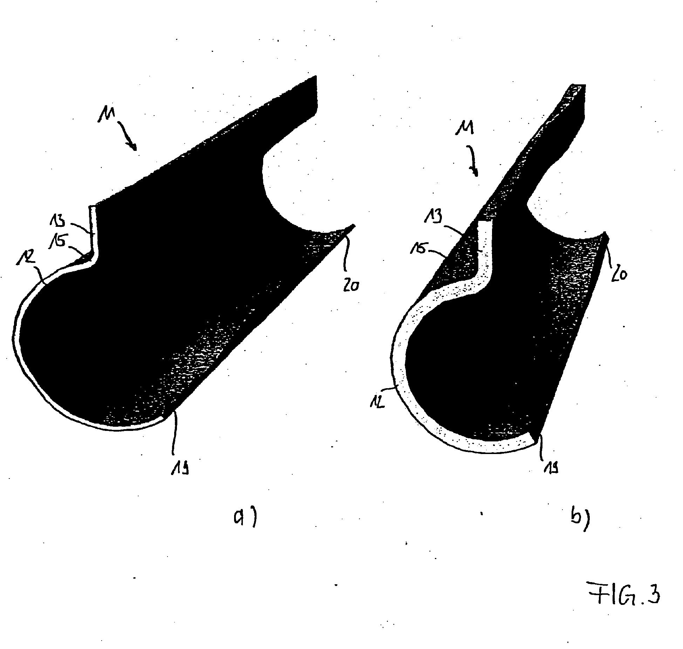

In Figur 3 sind gleiche Einzelheiten mit gleichen Bezugsziffern belegt wie in den vorangegangenen Figuren. Es ist jeweils ein Flanschrohr 11 gezeigt, bei dem von der freien Kante 14 ausgehend ein Teil des Rohrkörpers 12 weggeschnitten ist, und zwar über einen Winkel von ca. 120°. Der Rest des Rohrkörpers 12 einschließlich des radial nach außen abgebogenen Flansches 13 ist erkennbar. Der Rohrkörper 12 ist hierbei aus Blech von über der Länge veränderlicher Dicke dargestellt, wobei sich die Dickenvariation insbesondere an der unten liegenden Schnittkante erkennen läßt.

In Darstellung a) ist die Blechdicke zu den Enden 19, 20 des Flanschrohres 11 hin geringer, während sie in einem mittleren Bereich erhöht ist.

In Darstellung b) ist die Dicke des Blechmaterials zu den axialen Enden 19, 20 hin größer, während sie in einem mittleren Bereich des Flanschrohres 11 geringer ist.

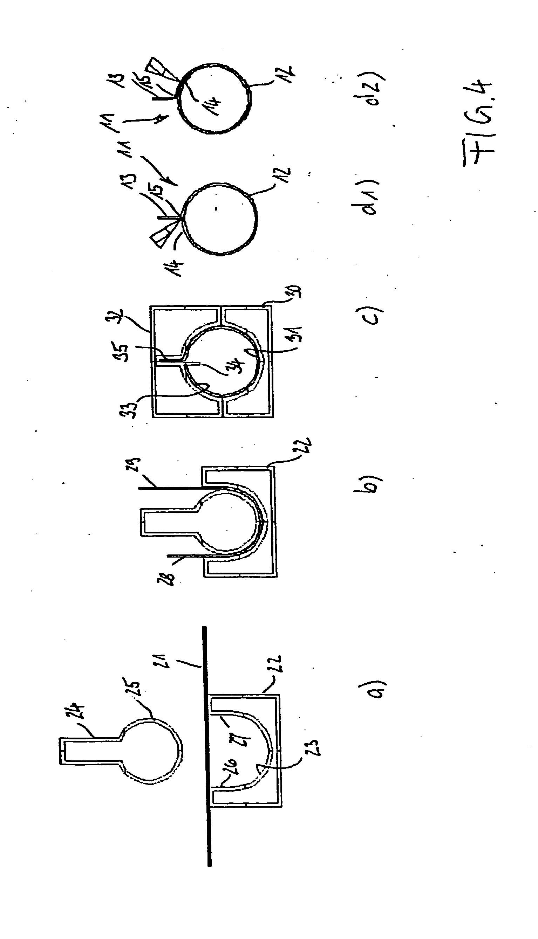

In Figur 4 ist eine Vorrichtung und ein Verfahren zum Herstellen erfindungsgemäßer Flanschrohre dargestellt. In Darstellung a) ist ein ebenes Blech 21 auf einem ersten Untergesenk 22 mit einer im Querschnitt U-förmigen Formmulde 23 gelegt. Oberhalb des Untergesenkes 22 ist ein Biegestempel 24 gezeigt, dessen Arbeitsbereich 25 Kreisquerschnitt hat.

In Darstellung b) ist der Stempel 24 in das Biegegesenk 22 eingedrückt, wobei das Blech 21 im Querschnitt zur U-Form gebogen ist mit einem kürzeren Schenkel 28 und einem längeren Schenkel 29. Die beiden Schenkel verlaufen parallel zueinander, da sie sich an den parallelen Bereichen 26, 27 der Formmulde 23 anlegen.

In Darstellung c) ist auf ein zweites Untergesenk 30 mit einer halbzylindrischen Formmulde 31, in die das Blech eingelegt wurde, ein Obergesenk 32 aufgedrückt, das eine halbzylindrische Formmulde 33 hat, die das Blech zur im wesentlichen runden Querschnittsform fertiggebogen hat. Innerhalb der Formmulde 33 ist ein radial nach innen vorstehendes Schwert 34 angeordnet, an die der kürzere Schenkel 28 anschlägt, der damit die freie Kante 14 des entstehenden Rohrkörpers 12 bildet. Weiterhin ist im Obergesenk 32 ein neben dem Schwert 34 angeordneter Schlitz 35 gezeigt, in den der längere Schenkel 29 des Bleches beim Rundbiegen eintritt, der dadurch radial nach außen abgebogen wird und den Flansch 13 des entstehenden Flanschrohres 11 bildet. In Darstellung d1) ist gezeigt, daß der Rohrkörper 12 am Fußbereich 15 des Flansches 13 verschweißt werden kann. In Darstellung d2) ist gezeigt, daß der Rohrkörper 12 in einem weiteren Biegegesenk ohne Schwert so reduziert werden kann, daß es zu einer Überlappung der freien Kante 14 mit dem an den Fußbereich 15 anschließenden Teil des Rohrkörpers 12 kommen kann. Hierbei ist eine radiale Durchschweißung im Überlappungsbereich von außen möglich.

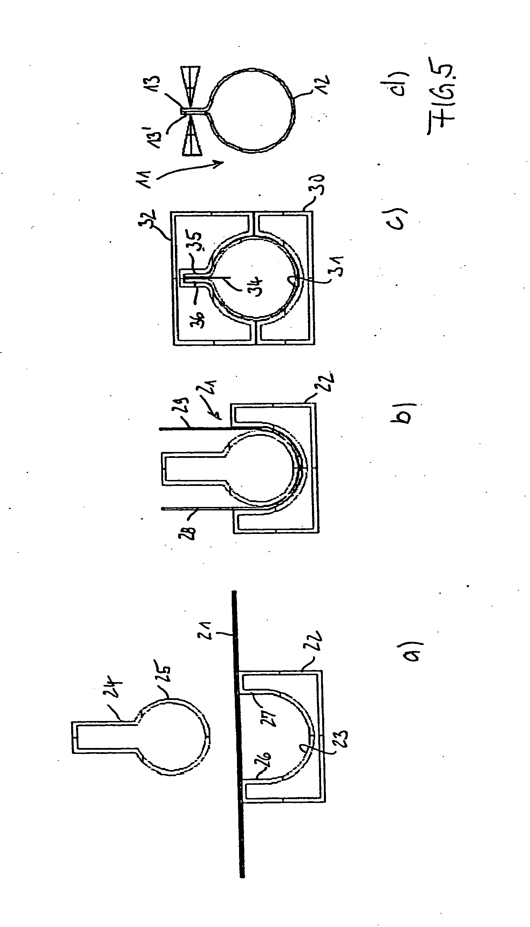

In Figur 5 ist eine weitere Vorrichtung und ein weiteres Verfahren zum Herstellen erfindungsgemäßer Flanschrohre dargestellt. In Darstellung a) ist ein ebenes Blech 21 auf einem ersten Untergesenk 22 mit einer U-förmigen Formmulde 23 gelegt. Oberhalb des ersten Untergesenkes ist ein Biegestempel 24 gezeigt, dessen Arbeitsbereich 25 Kreisquerschnitt hat.

In Darstellung b) ist der Stempel 24 in das Biegegesenk 22 eingedrückt, wobei das Blech 21 im Querschnitt zur U-Form gebogen ist, in diesem Fall mit zwei gleichlangen Schenkeln 28, 29. Die beiden Schenkel verlaufen parallel zueinander, da sie sich an den parallelen Bereichen 26, 27 der Formmulde 23 anlegen.

In Darstellung c) ist auf ein zweites Untergesenk 30 mit einer halbzylindrischen Formmulde 31, in die das Blech eingelegt wurde, ein Obergesenk 32 aufgedrückt, das eine halbzylindrische Formmulde 33 hat, die das Blech zur im wesentlichen runden Querschnittsform fertiggebogen hat. Innerhalb der Formmulde 33 ist ein radial nach innen vorstehendes Schwert 34 angeordnet, an die die Schenkel 28, 29 zunächst anschlagen. Weiterhin sind im Obergesenk 32 zwei jeweils zu beiden Seiten neben dem Schwert 34 angeordnete Schlitze 35, 36 gezeigt, in die die Schenkel 28, 29 des Bleches beim Rundbiegen eintreten, die dadurch radial nach außen abgebogen wird und gleichbreite Flanschbleche 13, 13' des entstehenden Flanschrohres 11 bilden. In Darstellung d) ist gezeigt, daß der Rohrkörper 12 im Bereich der Flanschbleche 13, 13' verschweißt werden kann. Sofern der Schlitz 36 kürzer gewählt wird als der Schlitz 35, kann das Flanschrohr auch die in Figur 2c dargestellte Konfiguration erhalten.

### Bezugszeichenliste

- 11: Flanschrohr
- 12: Rohrkörper
- 13: Flansch
- 14: freie Kante
- 15: Fußbereich
- 16: Schweißnaht
- 17: Energieeintrag
- 18: drittes Teil
- 19: erstes axiales Ende
- 20: zweites axiales Ende
- 21: Blech
- 22: erstes Untergesenk
- 23: erste Formmulde
- 24: Stempel
- 25: Formbereich
- 26: Flanke
- 27: Flanke
- 28: Schenkel
- 29: Schenkel
- 30: zweites Gesenkunterteil
- 31: zweite Formmulde
- 32: Obergesenk
- 33: Formmulde
- 34: Längsschwert
- 35: Längsschlitz
- 36: Längsschlitz

## Patentansprüche

1. Flanschrohr (11) aus Blech mit geschlossenem Querschnitt, das zumindest einen einstückig aus dem Blech des Rohrkörpers (12) gebildeten in Längsrichtung verlaufenden Flansch (13) aufweist.

2. Rohr nach Anspruch 1,
**dadurch gekennzeichnet,**
**daß** der zumindest eine Flansch (13) am Rohrkörper (12) tangential bis radial gerichtet ansetzt.

3. Rohr nach einem der Ansprüche 1 oder 2,
**dadurch gekennzeichnet,**
**daß** das Blech des Rohrkörpers (12) mit einer freien Kante (14) im stumpfen Stoß am Fußbereich (15) des zumindest einen Flansches (13) ansetzt.

4. Rohr nach einem der Ansprüche 1 oder 2,
**dadurch gekennzeichnet,**
**daß** das Blech des Rohrkörpers (12) mit einer freien Kante (14) innen über den
Fußbereich (15) des zumindest einen Flansches (13) hinaus überlappend anliegt.

5. Rohr nach einem der Ansprüche 1 oder 2,
**dadurch gekennzeichnet,**
**daß** das Blech des Rohrkörpers (12) mit einer vom Rohrkörper weggebogenen freien Kante (14) außen parallel am Flansch (13) anliegt.

6. Rohr nach einem der Ansprüche 1 bis 5,
**dadurch gekennzeichnet,**
**daß** der Rohrkörper (12) nahe dem Fußbereich (15) des zumindest einen Flansches (13) verschweißt ist.

7. Rohr nach einem der Ansprüche 1 bis 6,
**dadurch gekennzeichnet,**
**daß** das Blech des Rohrkörpers (12) im Querschnitt variable Dicke hat.

8. Rohr nach Anspruch 7,
**dadurch gekennzeichnet,**
**daß** der Flansch (13) aus dickerem Material ist, als der Bereich des geschlossenen Rohrkörpers (12).

9. Rohr nach Anspruch 7,
**dadurch gekennzeichnet,**
**daß** der Flansch (13) aus dünnerem Material ist, als der Bereich des geschlossenen Rohrkörpers (12).

10. Rohr nach einem der Ansprüche 1 bis 6,
**dadurch gekennzeichnet,**
**daß** das Blech des Rohrkörpers (12) über der Länge variable Dicke hat.

11. Rohr nach Anspruch 10,
**dadurch gekennzeichnet,**
**daß** die Wandstärke des Rohrkörpers (12) an den Enden (19, 20) dikkerldünner ist.

12. Rohr nach einem der Ansprüche 7 bis 11,
**dadurch gekennzeichnet,**
**daß** dünnere Wandbereiche 15 - 50 % der Stärke der dicksten Wandbereiche haben.

13. Rohr nach einem der Ansprüche 1 bis 12,
**dadurch gekennzeichnet,**
**daß** der Bereich des geschlossenen Rohrkörpers (12) einen Außendurchmesser von 30 -150 mm hat.

14. Rohr nach einem der Ansprüche 1 bis 13,
**dadurch gekennzeichnet,**
**daß** die Breite des zumindest einen Flansches (13) zwischen 20 und 50 mm liegt.

15. Rohr nach einem der Ansprüche 1 bis 14,
**dadurch gekennzeichnet,**
**daß** der Rohrkörper (12) zumindest einen flanschlosen Längsabschnitt umfaßt.

16. Verfahren zur Herstellung eines Flanschrohres (11) mit einem Rohrkörper mit geschlossenem Querschnitt, das zumindest einen einstückig aus dem Blech des Rohrkörpers (12) gebildeten in Längsrichtung verlaufenden Flansch (13) aufweist,
bei welchem in einem unteren ersten Biegegesenk (22) mittels eines Stempels (24) ein im Querschnitt U-förmiges Profil mit parallelen Schenkeln (28, 29) hergestellt wird, und
in einem unteren zweiten Biegegesenk (30) mittels eines oberen Biegegesenks (32) aus den beiden Schenkeln (28, 29) ein Rohrkörper (12) mit geschlossenem Querschnitt hergestellt wird, wobei aus zumindest einem der Schenkel (28, 29) der zumindest eine in Längsrichtung verlaufende Flansch (13) gebildet wird.

17. Verfahren nach Anspruch 16,
**dadurch gekennzeichnet,**
**daß** das im Querschnitt U-förmige Profil mit Schenkeln (28, 29) unterschiedlicher Länge hergestellt wird.

18. Verfahren nach einem der Ansprüche 16 oder 17,
**dadurch gekennzeichnet,**
**daß** der Rohrkörper (12) im Fußbereich (15) des zumindest einen Flansches (13) verschweißt wird.

19. Verfahren nach Anspruch 18,
**dadurch gekennzeichnet,**
**daß** das Verschweißen des Rohrkörpers (12) gleichzeitig mit dem Verbinden des zumindest einen Flansches (13) mit einem dritten Teil (18) erfolgt.

20. Werkzeug zur Herstellung eines Flanschrohres (11) aus Blech mit einem Rohrkörper (12) mit geschlossenem Querschnitt, das zumindest einen einstückig aus dem Blech des Rohrkörpers (12) gebildeten in Längsrichtung verlaufenden Flansch (13) aufweist, umfassend
ein Gesenkunterteil (30) mit im wesentlichen halbzylindrischer Aufnahmemulde (31) und ein Gesenkoberteil (32) mit im wesentlicher halbzylindrischer Formmulde (33), die die Aufnahmemulde (31) zum zylindrischen Querschnitt ergänzt, wobei in der Formmulde (33) ein längsverlaufendes Schwert (34) und parallel dazu zumindest ein ebener Längsschlitz (35) zur Aufnahme des zumindest einen Flansches (13) ausgebildet sind.

21. Werkzeug nach Anspruch 20,
**dadurch gekennzeichnet,**
**daß** parallel zum längsverlaufenden Schwert (34) in der Formmude (33) gegenüber dem zumindest einen ebenen Längsschlitz (35) ein zweiter ebener Längsschlitz (36) geringerer Tiefe zur Aufnahme einer vom Rohrkörper weggebogenen freien Kante (14) ausgebildet ist.

22. Werkzeug nach Anspruch 20,
**dadurch gekennzeichnet,**
**daß** parallel zum längsverlaufenden Schwert (34) in der Formmulde (33) gegenüber dem zumindest einen ebenen Längsschlitz (35) ein zweiter ebener Längsschlitz (36) gleicher Tiefe zur Aufnahme eines zweiten Flanschbleches für einen doppellagigen Flansch ausgebildet ist.
